# EUROPEAN PATENT APPLICATION

(11) **EP 4 804 060 A1**
(43) Date of publication of application: **09.09.2026**
(21) Application number: 26158010.4
(22) Date of filing: 11.02.2026
(51) Int. Cl.: G06F 21/32, G06N 20/00, G10L 17/04, G10L 25/51

(54) **METHODS AND SYSTEMS FOR TRAINING MACHINE LEARNING MODELS TO ENHANCE THE DETECTION OF FRAUDULENT AUDIO DATA**

(30) Priority: 05.03.2025 US 202519070716
(71) Applicant: Daon Technology, Douglas Isle of Man IM1 2LN (GB)
(72) Inventor: MANTECON, Ana, Douglas (GB); BLOUET, Raphael, Douglas (GB); BALCIUNAS, Linas, Douglas (GB); JOVANOVIC, Kosta, Douglas (GB)
(74) Representative: Murgitroyd & Company

(57) **Abstract**

A method for training machine learning models to enhance detection of fraudulent audio data is provided that includes obtaining, by an electronic device, a training data set of genuine and replay audio data files and partitioning the replay audio data files into data sets based on intrinsic properties of the replay audio data files. Moreover, the method includes training a different machine learning model for each data set using the genuine audio data files and the replay audio data files in the respective data set.

## Description

### BACKGROUND OF THE INVENTION

This invention relates generally to audio data obtained during authentication transactions, and more particularly, to methods and systems for training machine learning models to enhance the detection of fraudulent audio data.

People conduct many different types of transactions with service providers in person and remotely over the Internet. Network-based transactions conducted over the Internet may involve, for example, purchasing items from a merchant website or accessing confidential information from a website. Service providers that own and operate such websites typically require successfully authenticating a person before allowing the person to conduct a desired transaction.

Typically, during network-based biometric authentication transactions conducted with a person at a remote location, the person provides a claim of identity and biometric data. The biometric data is generally captured from the person with a capture device most convenient to the person, for example, the person's smart phone or other smart device. However, imposters have been known to impersonate people by providing a false claim of identity supported by fraudulent biometric data in an effort to deceive a service provider into concluding the imposter is the person he or she claims to be. Such impersonations are known as spoofing.

Social media platforms allow people to post personal videos publicly. Impostors can obtain audio data from these posts and reproduce the audio data as the voice of a person during a fraudulent authentication transaction. Furthermore, deep fake generation techniques allow impostors to clone the voice data of a person which can then be replayed during a fraudulent authentication transaction.

Known voice replay detection algorithms are trained with audio data replayed by a small number of replay devices. As a result, known voice replay detection algorithms typically detect replays generated by the small number of replay devices only. However, a large number of replay devices and related audio data are excluded. As a result, known voice replay detection algorithms typically cannot detect replayed audio data generated by the excluded replay devices.

Consequently, many voice replay detection algorithms generally do not provide high confidence replay detection support for entities dependent upon accurate biometric verification transaction results. Moreover, voice replay detection algorithms have been known to use substantial computer system memory and to require substantial computing resources which increases the time and costs of determining user liveness. As a result, the replay detection and thus liveness determination results tend to be less rigorous, accurate and trustworthy than desired.

Thus, it would be advantageous and an improvement over the relevant technology to provide a method, an electronic device, and a computer-readable recording medium capable of training machine learning models to enhance the detection of fraudulent audio data.

### BRIEF DESCRIPTION OF THE INVENTION

An aspect of the present disclosure provides a method for training machine learning models to enhance detection of fraudulent audio data including the steps of obtaining, by an electronic device, a training dataset of genuine and replay audio data files and partitioning the replay audio data files into data sets based on intrinsic properties of the replay audio data files. Moreover, the method includes training a different machine learning model for each data set using the genuine audio data files and the replay audio data files in the respective data set

In an embodiment of the present disclosure, the partitioning step includes determining features of each obtained replay audio data file, and clustering together, using a clustering technique and based on feature similarity, the obtained replay audio data files. Each cluster is a different one of the data sets of obtained replay audio data files.

In another embodiment of the present disclosure, the clustering technique is an unsupervised or supervised technique.

In yet another embodiment of the present disclosure, the partitioning step includes creating a set of measurable types of artifacts based on the intrinsic properties of the replay audio data files and determining at least one artifact pattern. Any combination of the types of artifacts is an artifact pattern. Moreover, the method includes partitioning, based on the determined at least one artifact pattern, replay audio data files into a number of the data sets, wherein the number of data sets matches the number of artifact patterns in the at least one artifact pattern.

In yet another embodiment of the present disclosure, the training step includes training a machine learning model using the genuine audio data files and the replay audio data files in one of the data sets, and training a different machine learning model using the genuine audio data files and the replay audio data files in a different one of the data sets.

In yet another embodiment of the present disclosure, the measurable artifacts are created by low quality hardware in replay devices.

In yet another embodiment of the present disclosure, the replay audio data files free of any artifact pattern are created by replay devices including high quality hardware.

Another aspect of the present disclosure provides a non-transitory computer-readable recording medium in an electronic device for training machine learning models that enhance detection of fraudulent audio data. The non-transitory computer-readable recording medium stores instructions which when executed by a hardware processor performs the steps of the methods described above.

Another aspect of the present disclosure provides an electronic device for training machine learning models to enhance detection of fraudulent audio data. The electronic device includes a processor and a memory configured to store data. The electronic device is associated with a network and the memory is in communication with the processor. The memory has instructions stored thereon which, when read and executed by the processor, cause the electronic device to obtain a training data set of genuine and replay audio data files, partition the replay audio data files into data sets based on intrinsic properties of the replay audio data files, and train a different machine learning model for each data set using the genuine audio data files and the replay audio data files in the respective data set.

In yet another embodiment of the present disclosure, for partitioning the replay audio data files, the instructions when read and executed by the processor, cause the electronic device to determine, using a clustering technique, features of each obtained replay audio data file, and cluster together, based on feature similarity, the obtained replay audio data files. Each cluster is a different one of the data sets of obtained replay audio data files.

In yet another embodiment of the present disclosure, the clustering technique is an unsupervised or supervised technique.

In yet another embodiment of the present disclosure, for partitioning the replay audio data files, the instructions when read and executed by the processor, cause the electronic device to create a set of measurable types of artifacts based on the intrinsic properties of the replay audio data files and determine at least one artifact pattern, wherein any combination of the types of artifacts is an artifact pattern. Moreover, the instructions when read and executed by the processor, cause the electronic device to partition, based on the determined at least one artifact pattern, replay audio data files into a number of the data sets, wherein the number of data sets matches the number of artifact patterns in the at least one artifact pattern.

In yet another embodiment of the present disclosure, the instructions when read and executed by the processor cause the electronic device to train a machine learning model using the genuine audio data files and the replay audio data files in one of the data sets, and train a different machine learning model using the genuine audio data files and the replay audio data files in a different one of the data sets.

In another aspect of the present disclosure, a method for enhancing detection of fraudulent audio data is provided that includes the steps of receiving, by an electronic device audio data of a speaker, and calculating, by one of a plurality of trained machine learning models operated by the electronic device, an artifact pattern voice replay score reflecting the likelihood that the received audio data includes an artifact pattern. Moreover, the method includes calculating, by a different one of the plurality of trained machine learning models operated by the electronic device, a free voice replay score reflecting the likelihood that the received audio data is free of the artifact pattern and combining the artifact pattern and free voice replay scores into a replay detection score. The replay detection score is compared against a threshold value and in response to determining the replay detection score satisfies the threshold value, the method determines that the received audio data is of a live person.

In an embodiment of the present disclosure, the method further includes determining the received audio data is fraudulent in response to determining the replay detection score fails to satisfy the threshold value.

### BRIEF DESCRIPTION OF THE DRAWINGS

Figure 1 is a schematic diagram of an example computing system for enhancing the detection of fraudulent audio data according to an embodiment of the present disclosure;
Figure 2 is a more detailed schematic diagram illustrating an electronic device in the system of Figure 1;
Figure 3 is a diagram illustrating an example audio signal;
Figure 4 is a flowchart illustrating an example method and algorithm for training machine learning models according to an embodiment of the present disclosure;
Figure 5 is a flowchart illustrating another example method and algorithm for training machine learning models similar to that shown in Figure 4, further including steps for partitioning replay audio data files using pattern matching techniques according to an embodiment of the present disclosure; and
Figure 6 is a flowchart illustrating an example method and algorithm for enhancing the detection of fraudulent audio data according to an embodiment of the present disclosure.

### DETAILED DESCRIPTION OF THE INVENTION

The following detailed description is made with reference to the accompanying drawings and is provided to assist in a comprehensive understanding of various example embodiments of the present disclosure. The following description includes various details to assist in that understanding, but these are to be regarded merely as examples and not for the purpose of limiting the present disclosure as defined by the appended claims and their equivalents. The words and phrases used in the following description are merely used to enable a clear and consistent understanding of the present disclosure. In addition, descriptions of well-known structures, functions, and configurations may have been omitted for clarity and conciseness. Those of ordinary skill in the art will recognize that various changes and modifications of the example embodiments described herein can be made without departing from the spirit and scope of the present disclosure.

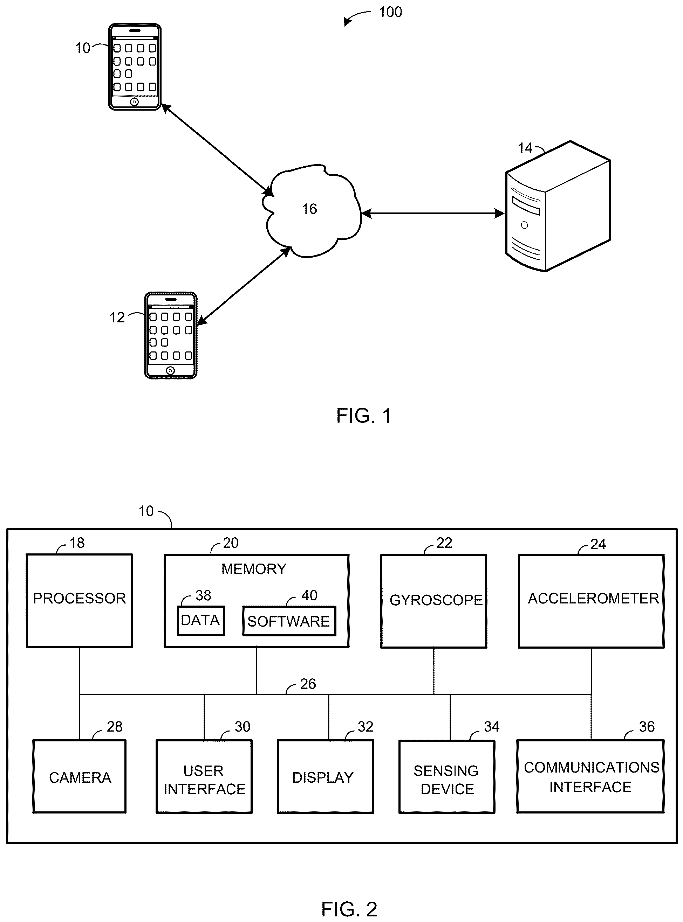

Figure 1 is a schematic diagram of an example computing system 100 for enhancing the detection of fraudulent audio data according to an embodiment of the present disclosure. As shown in Figure 1, the main elements of the system 100 include an electronic device 10, an operational device 12, and a server 14 communicatively connected via a network 16.

In Figure 1, the electronic device 10 can be any electronic device capable of at least downloading applications over the Internet, running applications, capturing and storing data temporarily and/or permanently, and otherwise performing any and all functions described herein by any computer, computer system, server or other electronic device included in the system 100. One example of the electronic device 10 is a smart phone. Other examples include, but are not limited to, a cellular phone, a tablet computer, a phablet computer, a laptop computer, a personal computer (PC) and any type of hand-held consumer electronic device having wired or wireless networking capabilities capable of performing the functions, methods, and/or algorithms described herein. The electronic device 10 may alternatively be any type of server or computer implemented as a network server or network computer. The operational device 12 is an electronic device like the electronic device 12 described herein.

The server 14 can be, for example, any type of server or computer implemented as a network server or network computer. The electronic device 10, the operational device 12, and the server 14 may each alternatively be referred to as an information system. It is contemplated by the present disclosure that the server 14 is also an electronic device.

The network 16 may be implemented as a 5G communications network. Alternatively, the network 16 may be implemented as any wireless network including, but not limited to, 4G, 3G, Wi-Fi, Global System for Mobile (GSM), Enhanced Data for GSM Evolution (EDGE), and any combination of a LAN, a wide area network (WAN) and the Internet. The network 16 may also be any type of wired network or a combination of wired and wireless networks.

It is contemplated by the present disclosure that the number of electronic devices 10, operational devices 12, and servers 14 is not limited to the number shown in the system 100. Rather, any number of electronic devices 10, operational devices 12, and servers 14 may be included in the system 100.

Figure 2 is a more detailed schematic diagram illustrating the electronic device 10. The electronic device 10 includes components such as, but not limited to, one or more processors 18, a memory 20, a gyroscope 22, an accelerometer 24, a bus 26, a camera 28, a user interface 30, a display 32, a sensing device 34, and a communications interface 36. General communication between the components in the electronic device 10 is provided via the bus 26.

The processor 18 executes software instructions, or computer programs, stored in the memory 20. As used herein, the term processor is not limited to just those integrated circuits referred to in the art as a processor, but broadly refers to a computer, a microcontroller, a microcomputer, a programmable logic controller, an application specific integrated circuit, and any other programmable circuit capable of executing at least a portion of the functions and/or methods described herein. The above examples are not intended to limit in any way the definition and/or meaning of the term "processor."

The memory 20 may be any non-transitory computer-readable recording medium. Non-transitory computer-readable recording media may be any tangible computer-based device implemented in any method or technology for short-term and long-term storage of information or data. Moreover, the non-transitory computer-readable recording media may be implemented using any appropriate combination of alterable, volatile or non-volatile memory or non-alterable, or fixed, memory. The alterable memory, whether volatile or non-volatile, can be implemented using any one or more of static or dynamic RAM (Random Access Memory), a floppy disc and disc drive, a writeable or re-writeable optical disc and disc drive, a hard drive, flash memory or the like. Similarly, the non-alterable or fixed memory can be implemented using any one or more of ROM (Read-Only Memory), PROM (Programmable Read-Only Memory), EPROM (Erasable Programmable Read-Only Memory), EEPROM (Electrically Erasable Programmable Read-Only Memory), and disc drive or the like. Furthermore, the non-transitory computer-readable recording media may be implemented as smart cards, SIMs, any type of physical and/or virtual storage, or any other digital source such as a network or the Internet from which computer programs, applications or executable instructions can be read.

The memory 20 may be used to store any type of data 38, for example, data records of people, training data sets of genuine and replay audio data files, and data sets of partitioned replay audio data files. Each data record is typically for a respective person. The data record for each person may include data such as, but not limited to, biometric modality data, biometric templates, and personal data of a user. A biometric template can be any type of mathematical representation of biometric modality data. Biometric modality data is the data of a biometric modality of a person. For the methods and systems described herein, the biometric modality is voice. Voice biometric data is audio data spoken by a person, for example, while remotely opening a banking account or during a biometric authentication transaction.

Voice biometric data may be captured by the electronic device 10 by recording a person freely speaking or speaking a passphrase. Captured voice biometric data may be temporarily or permanently stored in the electronic device 10 or in any device capable of communicating with the electronic device 10 via the network 16. Voice biometric data is captured as audio data. Audio signals are audio data. As used herein, capture means to record temporarily or permanently, any data including, for example, biometric modality data of a person.

Audio signals have intrinsic properties that refer to any distinctive, measurable characteristic that arises from the nature of the signal itself or from the processes involved in generating, transmitting, or storing the signal. Intrinsic properties include naturally occurring features and unintended artifacts. Naturally occurring features include, but are not limited to, spectral content, timbre, or harmonic structure. Unintended artifacts include, for example, compression noise, distortions, encoding artifacts, or artifacts introduced by a replay device or a microphone, as long as they are inherent to the data and can be systematically analyzed.

The memory 20 can also be used to store any type of software 40. As used herein, the term "software" is intended to encompass an executable computer program that exists permanently or temporarily on any non-transitory computer-readable recordable medium that causes the electronic device 10 to perform at least a portion of the functions, methods, and/or algorithms described herein. Application programs are software and include, but are not limited to, operating systems, Internet browser applications, authentication applications, machine learning algorithms (MLA), machine learning models (MLM), and any other software and/or any type of instructions associated with algorithms, processes, or operations for controlling the general functions and operations of the electronic device 10. The software may also include computer programs that implement buffers and use RAM to store temporary data.

Authentication applications enable the electronic device 10 to conduct user verification and identification (1:C) transactions with any type of authentication data, where "C" is a number of candidates.

Machine learning models (MLM) have parameters which are modified during training to optimize functionality of the models trained using a machine learning algorithm (MLA). Trained machine learning models may be used to calculate a voice replay score indicating the likelihood that received audio data was replayed and is thus fraudulent. Such machine learning models may be trained using genuine audio data and replay audio data. Genuine audio data is non-fraudulent audio data spoken by real people. Replay audio data is fraudulent voice data created by replaying genuine audio data with a replay device. Many different types of replay devices may be used to create fraudulent audio data. Replay devices include, but are not limited to, tablet computers, smart phones, laptop computers, and loudspeakers.

During training, the genuine and fraudulent voice data are entered into a computer, for example, the server 14 operating a machine learning algorithm. Typically, hundreds of thousands of genuine and fraudulent voice biometric data samples are required to adequately train an MLM. Voice biometric data samples may also be referred to herein as audio data files.

The process of verifying the identity of a person is known as a verification transaction. Typically, during a verification transaction based on voice biometric data a verification template is generated from capturing free speech or a specific spoken passphrase during the transaction. The verification template is compared against a corresponding recorded enrolment template of the person and a score is calculated for the comparison. The recorded enrolment template is created during enrolment of the person in an authentication system. If the calculated score is at least equal to a threshold score, the identity of the person is verified as true. Alternatively, the captured voice biometric data may be compared against the corresponding record voice biometric data to verify the identity of the person.

The gyroscope 22 and the one or more accelerometers 24 generate data regarding rotation and translation of the electronic device 10 that may be communicated to the processor 18 and the memory 20 via the bus 26. The gyroscope 22 and accelerometer 24 are typically included in electronic devices that are primarily mobile, for example, smart phones and other smart devices, but not in electronic devices that are primarily stationary, for example, servers or personal computers. Thus, the electronic device 10 may alternatively not include the gyroscope 22 or the one or more accelerometers 24 or may not include either.

The camera 28 captures image data. The camera 28 can be one or more imaging devices configured to record image data of at least a portion of the body of a person including any biometric modality of the person while utilizing the electronic device 10.

The user interface 30 and the display 32 allow interaction between a person and the electronic device 10. The display 32 may include a visual display or monitor that displays information. For example, the display 32 may be a Liquid Crystal Display (LCD), an active matrix display, plasma display, or cathode ray tube (CRT). The user interface 30 may include a keypad, a keyboard, a mouse, an illuminator, a signal emitter, a microphone, and/or speakers.

Moreover, the user interface 30 and the display 32 may be integrated into a touch screen display. Accordingly, the display may also be used to show a graphical user interface, which can display various data and provide "forms" that include fields that allow for the entry of information by the person. Touching the screen at locations corresponding to the display of a graphical user interface allows the person to interact with the electronic device 10 to enter data, change settings, control functions, etc. Consequently, when the touch screen is touched, the user interface 30 communicates this change to the processor 18, and settings can be changed or information entered by the person can be captured and stored in the memory 20. The display 32 may function as an illumination source to apply illumination to an object while image data for the object is captured.

The sensing device 34 may include Radio Frequency Identification (RFID) components or systems for receiving information from other devices in the system 100 and for transmitting information to other devices in the system 100. The sensing device 34 may alternatively, or additionally, include components with Bluetooth, Near Field Communication (NFC), infrared, or other similar capabilities. Communications between the electronic device 10 of the user, the operational device 12, and the server 14 may occur via NFC, RFID, Bluetooth or the like only so a network connection from the electronic device 10 is unnecessary.

The communications interface 36 may include various network cards, and circuitry implemented in software and/or hardware to enable wired and/or wireless communications with other electronic devices 10 (not shown), the operational device 12, and the server 14 via the network 16. Communications include, for example, conducting cellular telephone calls and accessing the Internet over the network 16. By way of example, the communications interface 36 may be a digital subscriber line (DSL) card or modem, an integrated services digital network (ISDN) card, a cable modem, or a telephone modem to provide a data communication connection to a corresponding type of telephone line. As another example, the communications interface 36 may be a local area network (LAN) card (e.g., for Ethemet.TM. or an Asynchronous Transfer Model (ATM) network) to provide a data communication connection to a compatible LAN. As yet another example, the communications interface 36 may be a wire or a cable connecting the electronic device 10 with a LAN, or with accessories such as, but not limited to, other electronic devices (not shown). Further, the communications interface 36 may include peripheral interface devices, such as a Universal Serial Bus (USB) interface, a PCMCIA (Personal Computer Memory Card International Association) interface, and the like.

The communications interface 36 also allows the exchange of information across the network 16. The exchange of information may involve the transmission of radio frequency (RF) signals through an antenna (not shown). Moreover, the exchange of information may be between the electronic device 10, the operational device 12, the server 14, other electronic devices (not shown), and other computer systems (not shown) capable of communicating over the network 16. Examples of other computer systems (not shown) include computer systems of service providers such as, but not limited to, financial institutions, medical facilities, national security agencies, merchants, and authenticators. The electronic devices (not shown) may be associated with any person or with any type of entity including, but not limited to, commercial and non-commercial entities.

The server 14 may include the same or similar components as described herein with regard to the electronic device 10. Gyroscopes and accelerometers are typically included in electronic devices that are primarily mobile, for example, smart phones and other smart devices, but not in electronic devices that are primarily stationary, for example, servers or personal computers. Thus, the server 14 may not include a gyroscope and/or an accelerometer.

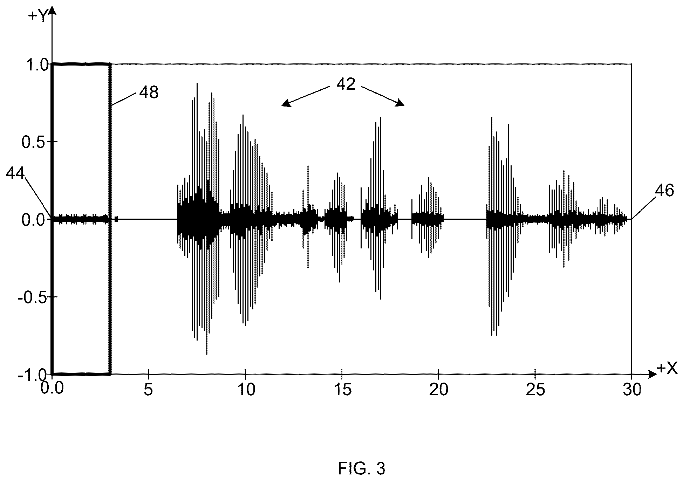

Figure 3 is a diagram illustrating an example audio signal 42. The audio signal 42 may be captured by, for example, the electronic device 10 while a person speaks a passphrase and the device 10 is operated by the person. Any phrase may be spoken to generate the signal 42.

Audio signals may be captured as a continuous analog signal and converted into a digital audio signal by sampling at any frequency within the range of 8 kHz and 96 kHz. Moreover, audio signals may be provided in Pulse Code Modulation (PCM) in 8, 16, or 24 bits or in compressed format, for example, in flac, mp3, a-law, mu-law and amr, and may be filtered using a pre-emphasis filter that amplifies the high-frequency content of the data. The audio signal 42 is audio data that includes voice biometric data of the person as well as information about a passphrase spoken by the person. Voice data, voice biometric data and audio data may be used interchangeably herein.

The audio signal 42 is plotted on a Cartesian coordinate system having X and Y-axes. The X-axis represents the number of discrete elements included in the captured audio signal 42 in which each discrete element is captured at a rate, in seconds, equal to the inverse of a sampling frequency. The Y-axis represents the normalized values of the discrete elements of the audio signal 42. Alternatively, the Y-axis may represent the actual values of the discrete elements in the audio signal 42. The audio signal 42 extends from an origin 44 to a terminus 46 and has a duration of about thirty (30) seconds. The duration of the audio signal 42 may vary from, for example, several seconds to several minutes.

A temporal window 48 is located in an initial position flush with the origin 44 and has a duration of, for example, three (3) seconds. Alternatively, the temporal window 48 may have any duration, for example, between one and thirty seconds that facilitates enhancing the detection of fraudulent audio data as described herein. The window 48 is translated in the positive direction along the X-axis over the duration of the signal 42 in three (3) second increments. Consequently, the temporal window 48 occupies ten different positions over the audio signal 42. Although the window 48 is described as being translated in three (3) second increments over the signal 42, it is contemplated by the present disclosure that the window 48 may be alternatively translated over the signal 42 in any time increment that facilitates detecting fraudulent audio data as described herein.

The window 48 can be implemented as a mathematical function that multiples the signal 42 by a window function. That is, a window function that is zero-valued outside of a chosen temporal interval and symmetric around the middle of the interval. The non-zero temporal interval of the window function is translated by the frame rate over the duration of the signal 42. The window function can be a Hamming window function. However, any window function may alternatively be used that is zero-valued outside of a chosen temporal interval and symmetric around the middle of the interval.

In each different position, the window 48 includes a different portion of the signal 42, which portion is processed, for example, by a feature extraction computer program to calculate signal features including, but not limited to, melspectrum Fourier coefficients. Alternatively, any other type of coefficients representative of the audio signal may be used, for example, spectral coefficients. The coefficients may be used to create a vector.

For replayed audio data, some of the coefficients may represent measurable artifacts imparted to the audio signal by a replay device. The measurable artifacts may, for example, modify the spectral shape of genuine audio data, and attenuate some frequencies in the audio data while emphasizing others. The measurable artifacts represent a characteristic of hardware imparted to the replayed audio data. The hardware may be, for example, a loudspeaker in the replay device.

Feature extraction is used to extract sequences of vectors from audio data, for example, the signal 42. Each sequence of vectors represents a feature. Such features include, but are not limited to, spectral features, temporal features, perceptual features, and deep learning audio embeddings. Spectral features can include, for example, Mel Frequency Cepstral Coefficients (MFCC), spectral centroid, bandwidth, roll-off, and chroma. Temporal features can include, for example, zero-crossing rate, energy, rhythm, tempo. Perpetual features can include, for example, pitch, loudness, and timbre. Deep learning audio embeddings include, for example, Wav2Vec2, HuBERT, Data2Vec, BYOL-A.

Generally, a replay device, for example, the electronic device 10 and another device, for example, the operational device 12 are involved in the generation of fraudulent replay audio data. The replay device may be used to reproduce, or replay, out loud pre-recorded audio data of a person. The other device records the replayed pre-recorded audio data. The other device may provide the replayed reproduced audio data during an authentication transaction or may transmit the recorded reproduced audio data to another device, for example, the server 14 to conduct an authentication transaction. The operational device 12 is common to both genuine audio data and replayed fraudulent audio data. All replay devices may impart artifacts to audio data.

An artifact pattern includes one or more measurable artifacts that appear in audio data, often as a result of unwanted distortions, noise, or anomalies within a signal. Artifact patterns facilitate determining whether measurable artifacts can be found in audio signals received, for example, during authentication transactions.

It has been observed that different replay devices impart different artifacts to replayed audio data. Such different artifacts may be used to categorize different audio data files created by replay devices. As a result, audio data files created by replay devices may be partitioned into any number of categories based on the artifacts. These artifacts have specific spectral patterns that can be extracted from audio data using ad-hoc feature extraction methods.

One measurable artifact can be defined, for example, as whether the L2 norm of the replay audio feature is higher or lower than a threshold. Another measurable artifact can be defined, for example, by computing the cumulative distribution of the replay audio data and measuring the slope of the distribution. A similarity score such as Mean Absolute Error (MAE) may be used to compare the slope of the replay audio data with a reference slope. If the similarity score is below a threshold, then the artifact is deemed to be present in the replay audio data. It is contemplated by the present disclosure that a different artifact pattern can be created for each measurable artifact, or a unique artifact pattern can be created considering the two measurable artifacts. The artifact pattern may be created using one or more measurable artifacts. Any number of measurable artifacts and artifact patterns may be created.

It is contemplated by the present disclosure that two categories of replay audio data files may be created based on whether an artifact pattern is detected in the replay audio data. One category can include replay audio data files that include the artifact pattern and another category can include replay audio data files that are free of the artifact pattern. More specifically, one category can include replay audio data files with a high L2 norm and another category can include replay audio data files with a low L2 norm. The L2 norm is the square root of the sum of the squares of the coefficients, for example, spectral coefficients calculated for the signal 42. Each of the categories described herein may also be referred to as a data set.

It is contemplated by the present disclosure that any number of categories of replay audio data files may alternatively be established. The different categories can be defined, for example, based on artifacts imparted to audio data by hardware components in a replay device or prices of the hardware components. Hardware components include, but are not limited to, loudspeakers.

Generally, measurable artifacts are generated by lower quality loudspeakers in, for example, the electronic devices 10, 12. Such artifacts generally are not generated by higher quality loudspeakers.

The categories of replay audio data files may also be used for training different MLMs. For example, one MLM may be trained to learn the difference between genuine data and replay audio data including the artifact pattern, while another MLM may be trained to learn the difference between genuine data and replay audio data free of the artifact pattern.

Clustering or pattern matching techniques may be used to partition replay training audio data files based on their intrinsic properties. Clustering is a machine learning technique used to group similar data points together based on shared characteristics. The objective of clustering is to identify underlying structures within a dataset by organizing data points into groups, or clusters, where members of the same cluster exhibit greater similarity to each other than to those in different clusters.

Clustering can be supervised or unsupervised. In unsupervised clustering, audio data files are grouped into categories without requiring predefined labels. The unsupervised clustering algorithm does not rely on labeled data but instead autonomously discovers patterns in the replay audio data files. Unsupervised clustering techniques identify similarities in intrinsic properties of audio data, for example, spectral features, temporal patterns, or statistical characteristics. Unsupervised clustering techniques can be used to analyze intrinsic properties of replay audio data files to determine similarities between the files and to group similar files according to their intrinsic properties. The number and composition of clusters are determined based on similarity metrics, such as Euclidean distance or density distribution. Unsupervised clustering algorithms include, but are not limited to, K-Means, DBSCAN, and hierarchical clustering.

In supervised clustering labeled data is integrated into the clustering process, using predefined categories to guide the formation of clusters. An example of supervised clustering is training a neural network to classify data into different classes. In this scenario, data points are grouped based on patterns observed in labeled training data, effectively forming well-defined clusters that correspond to the given class labels. Supervised clustering uses algorithms like decision trees, neural networks, and SVMs to minimize error and improve predictions.

Generally, pattern matching is a technique where a specific pattern associated with data is identified. Replay audio data is identified and classified into different categories based on the presence or absence of a known pattern within the replay audio data. An example pattern may be a measurable artifact in data, for example, computing the cumulative distribution and measuring the slope of the distribution. Another example may be to categorize replay audio data by the loudspeaker components in a replay device or prices of the replay devices. Any pattern of data or information regarding the process of recording replay audio data may be used to define a category and thus partition the data.

Partitioning the replay audio data files into different data sets and training an MLM using a different data set, enables each MLM to focus on learning different differences between genuine audio data and replayed audio data. For example, a MLM trained using replay audio data files including an artifact pattern is trained to learn the types of measurable artifacts in that artifact pattern. Similarly, another MLM may be trained to learn a different artifact pattern or whether replay audio data is free of any artifact patterns. As a result, the ability of each trained MLM to distinguish between genuine audio data and replayed audio data is enhanced.

Each trained MLM may calculate a voice replay score. For example, one of the trained MLMs may calculate a voice replay score reflecting the likelihood that captured or received audio data includes measurable artifacts, while the other trained MLM may calculate a different voice replay score reflecting the likelihood that captured or received audio data is free of measurable artifacts.

The two scores may be combined to generate a replay detection score. The scores can be combined using many different methods including, but not limited to, computing the mean of the two scores, computing the average of the two scores, computing the product of the two scores, learning the optimal combination of weights via logistic regression, bagging, and boosting.

Social media platforms allow people to post personal videos publicly. Impostors can obtain audio data from these posts and reproduce the audio data as the voice of a person during a fraudulent authentication transaction. Furthermore, deep fake generation techniques allow impostors to clone the voice data of a person which can then be replayed during a fraudulent authentication transaction.

Known voice replay detection algorithms are trained with audio data replayed by a small number of replay devices. As a result, known voice replay detection algorithms typically detect replays generated by the small number of replay devices only. However, a large number of replay devices and related audio data are excluded. As a result, known voice replay detection algorithms typically cannot detect replayed audio data generated by the excluded replay devices.

Consequently, many voice replay detection algorithms generally do not provide high confidence replay detection support for entities dependent upon accurate biometric verification transaction results. Moreover, voice replay detection algorithms have been known to use substantial computer system memory and to require substantial computing resources which increases the time and costs of determining user liveness. As a result, the replay detection and thus liveness determination results tend to be less rigorous, accurate and trustworthy than desired.

To address these problems the electronic device 10 may train machine learning models to enhance the detection of fraudulent audio data by obtaining a training dataset of audio data files that includes genuine and replay audio data files. Moreover, the electronic device 10 may partition the replay audio data files into data sets based on intrinsic properties of the replay audio data files, and train a different machine learning model for each data set using the genuine audio data files and the replay audio data files in the respective data set.

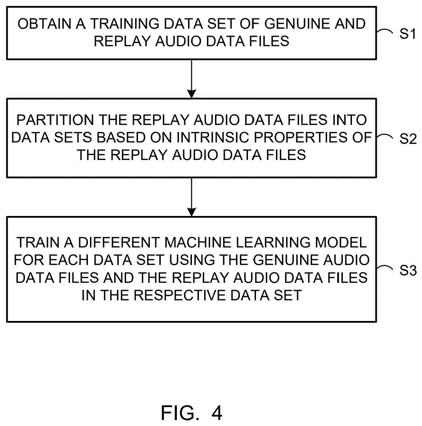

Figure 4 is a flowchart illustrating an example method and algorithm for training machine learning models (MLM) according to an embodiment of the present disclosure. Figure 4 illustrates example operations performed when the electronic device 10 runs software 40 stored in the memory 20 to train a set of machine learning models. A person may cause the electronic device 10 to run the software 40 or the electronic device 10 may automatically run the software 40.

In step S1, the software 40 executed by the processor 18 causes the electronic device 10 to obtain a training set of genuine and replay audio data files and, in step S2, to partition the replay audio data files into data sets based on intrinsic properties of the replay audio files. Intrinsic properties include naturally occurring features and unintended measurable artifacts. Naturally occurring features include, but are not limited to, spectral content, timbre, or harmonic structure. Unintended measurable artifacts include, for example, compression noise, distortions, encoding artifacts, or artifacts introduced by a replay device or a microphone, as long as they are inherent to the data and can be systematically analyzed.

Next, in step S3, the software 40 executed by the processor 18 causes the electronic device 10 to train a different machine learning model for each data set using the genuine audio data files and the replay audio data files in the respective data set.

Using the method and algorithm for training machine learning models (MLM) facilitates creating MLMs that are capable of enhancing detection of intrinsic properties, for example, measurable artifacts imparted to genuine pre-recorded audio data by replay devices. Thus, the detection of fraudulent audio data is enhanced which facilitates enhancing the accuracy, trustworthiness, and robustness of liveness detection results and thus authentication transaction results.

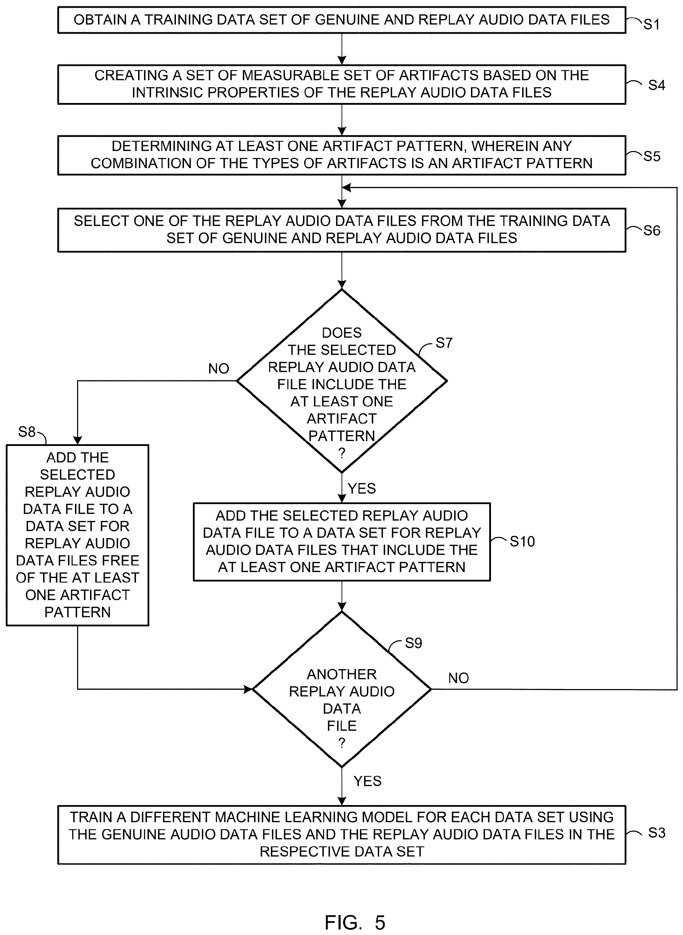

Figure 5 is a flowchart illustrating another example method and algorithm for training machine learning models (MLM) similar to that shown in Figure 4. However, step S2 has been replaced by steps S4 to S8 which describe details of partitioning the replay audio data using pattern matching techniques according to an embodiment of the present disclosure. Thus, some of the information shown in Figure 5 is the same as shown in Figure 4 as described in more detail below. As such, features illustrated in Figure 5 that are identical to features illustrated in Figure 4 are identified using the same designations used in Figure 4.

Figure 5 illustrates example operations performed when the electronic device 10 runs software 40 stored in the memory 20. A person may cause the electronic device 10 to run the software 40 or the electronic device 10 may automatically run the software 40.

In step S1, the software 40 executed by the processor 18 causes the electronic device 10 to obtain a training set of genuine and replay audio data files. In this example method and algorithm the obtained replay audio data files are partitioned using pattern matching.

Generally, pattern matching is a technique where a specific pattern associated with data is identified. Replay audio data is identified and classified into different categories based on the presence or absence of a known pattern within the replay audio data. An example pattern may be a measurable artifact in data, for example, computing the cumulative distribution and measuring the slope of the distribution. Another example may be to categorize replay data by the loudspeaker components in a replay device or prices of the replay devices. Any pattern of data can be used to define a category and thus partition the data.

Different replay devices impart different artifacts to replayed audio data. Such different artifacts may be used to categorize replayed audio data files. As a result, the replay audio data files can be partitioned into any number of categories based on the artifacts.

One measurable artifact can be defined, for example, as whether the L2 norm of the replay audio feature is higher or lower than a threshold. Another measurable artifact can be defined, for example, by computing the cumulative distribution of the replay audio data and measuring the slope of the distribution. A similarity score such as Mean Absolute Error (MAE) may be used to compare the slope of the replay audio data with a reference slope. If the similarity score is below a threshold, then the artifact is deemed to be present in the replay audio data. It is contemplated by the present disclosure that a different artifact pattern can be created for each measurable artifact, or a unique artifact pattern can be created considering the two measurable artifacts. The artifact pattern may be created using one or more measurable artifacts. Any number of measurable artifacts and artifact patterns may be created.

It is contemplated by the present disclosure that two categories of replay audio data files may be created based on whether an artifact pattern is detected in the replay audio data. One category can include replay audio data files that include the artifact pattern and another category can include replay audio data files that are free of the artifact pattern. More specifically, one category can include replay audio data files with a high L2 norm and another category can include replay audio data files with a low L2 norm. The L2 norm is the square root of the sum of the squares of the coefficients, for example, spectral coefficients calculated for the signal 42. Each of the categories described herein may also be referred to as a data set. Measurable artifacts have specific spectral patterns that can be extracted from audio data using ad-hoc feature extraction methods. It is contemplated by the present disclosure that replay audio data files may be partitioned into any number of different categories based on artifacts.

Next in step S4, the software 40 executed by the processor 18 causes the electronic device 10 to create a set of measurable types of artifacts based on the intrinsic properties of the replay audio data files. Intrinsic properties include naturally occurring features and unintended measurable artifacts. Naturally occurring features include, but are not limited to, spectral content, timbre, or harmonic structure. Unintended measurable artifacts include, for example, compression noise, distortions, encoding artifacts, or artifacts introduced by a replay device or a microphone, as long as they are inherent to the data and can be systematically analyzed.

One type of measurable artifact can be defined, for example, as whether the L2 norm of the replay audio feature is higher or lower than a threshold. Another type of measurable artifact can be defined, for example, by computing the cumulative distribution of the replay audio data and measuring the slope of the distribution.

Next, in step S5, the software 40 executed by the processor 18 causes the electronic device 10 to determine at least one artifact pattern. It is contemplated by the present disclosure that any combination of the types of artifacts may be an artifact pattern. In step S6, the software 40 executed by the processor 18 causes the electronic device 10 to select one of the replay audio data files from the training data set of genuine and replay audio data files. Alternatively, a person can operate the electronic device 10 to select a replay audio data file. Next, in step S7, the processor 18 causes the electronic device 10 to determine whether the selected replay audio data file includes the at least one artifact pattern.

There are different types of artifact patterns. A type of artifact pattern may be selected, a measurable feature for the selected artifact pattern may be selected, and the selected feature can be extracted from replay audio data. The extracted feature is then compared against a reference using statistical metrics or thresholding methods to determine whether the selected artifact pattern is in the replay audio data. For example, an artifact pattern may be defined as whether the L2 norm of the extracted feature is higher or lower than a threshold. Another example artifact pattern may involve computing the cumulative distribution of the replay audio data and measuring the slope of the distribution. A similarity score such as Mean Absolute Error (MAE) may be used to compare the slope of the replay audio data with a reference slope. If the similarity score is below a threshold then the selected artifact pattern is deemed to be in the replay audio data.

When the selected replay audio data file is free of the at least one artifact pattern, in step S8, the software 40 executed by the processor 18 causes the electronic device 10 to add the selected audio data file to a data set for files free of the at least one artifact pattern. The data set may be stored in the memory 20.

Next, in step S9, the software 40 executed by the processor 18 causes the electronic device 10 to determine whether another replay audio data file is to be selected. If yes, in step S6 the software 40 executed by the processor 18 causes the electronic device 10 to select another replay audio data file from the training dataset of audio data files.

However, if the selected replay audio data file includes the at least one artifact, in step S10, the software 40 executed by the processor 18 causes the electronic device 10 to add the selected data file to a data set for replay audio data files that include the at least one artifact pattern. Next, in step S9, the software 40 executed by the processor 18 causes the electronic device 10 to determine whether another replay audio data file is to be selected. When any of the replay audio data files has not been selected another replay audio data file is to be selected until all the replay audio data files have been selected. Each replay audio data file may be selected once.

Otherwise, when another replay audio data file is not to be selected partitioning of the replay audio data is complete. Next, in step S3, the software 40 executed by the processor 18 causes the electronic device 10 to train a different machine learning model for each data set using the genuine audio data files and the replay audio data files in the respective data set.

Using the method and algorithm for training machine learning models (MLM) facilitates creating MLMs that are capable of enhancing detection of measurable artifacts imparted to genuine pre-recorded audio data by replay devices. Thus, the detection of fraudulent audio data is enhanced which facilitates enhancing the accuracy, trustworthiness, and robustness of liveness detection results and thus authentication transaction results.

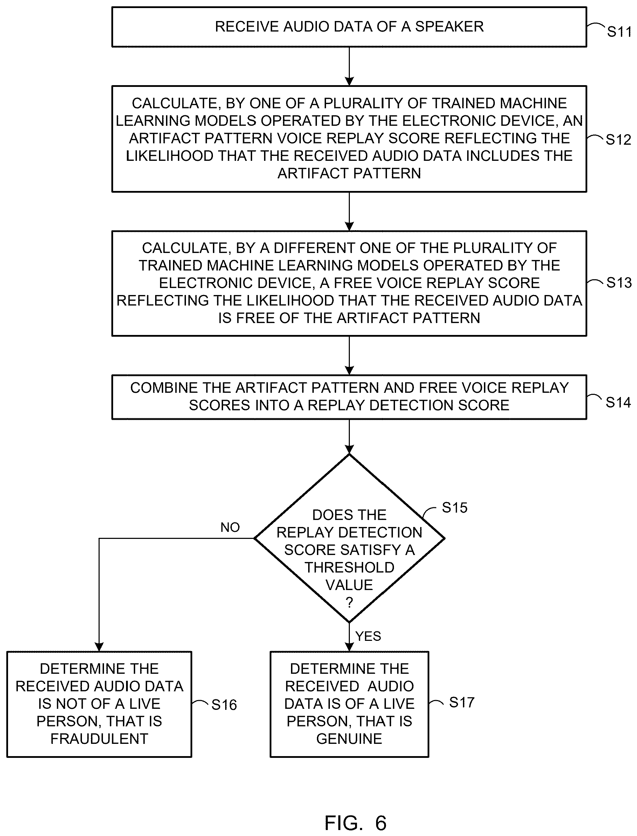

Figure 6 is a flowchart illustrating an example method and algorithm for enhancing detection of fraudulent audio data according to an embodiment of the present disclosure. Figure 6 illustrates example operations performed when the electronic device 10 runs software 40 stored in the memory 20 to enhance detection of fraudulent audio. A person may cause the electronic device 10 to run the software 38 or the electronic device 10 may automatically run the software 40. The software 40 includes at least two different trained machine learning models (MLM), for example, the trained machine learning models described herein with regard to the flowchart shown in Figure 5.

In step S11, the software 40 executed by the processor 18 causes the electronic device 10 to receive audio data of a person while speaking, for example, during an authentication transaction. The audio data may be captured by another electronic device (not shown) in the system 100 and transmitted to the electronic device 10 via the network 16 for receipt by the electronic device 10. Alternatively, the person may operate the electronic device 10 to capture audio data of his or herself.

Next, in step S12, the software 40 executed by the processor 18 causes the electronic device 10 to calculate, by one of a plurality of trained machine learning models operated by the electronic device, an artifact pattern voice replay score reflecting the likelihood that the received audio data includes an artifact pattern typically associated with low-quality hardware. In step S13, the software 40 executed by the processor 18 causes the electronic device 10 to calculate, using a different one of the trained machine learning models operated by the electronic device, a free voice replay score reflecting the likelihood that the received audio data is free of the artifact pattern.

Next, in step S14, the software 40 executed by the processor 18 causes the electronic device 10 to combine the artifact pattern and the free voice replay scores into a replay detection score. The voice replay scores can be combined using many different methods including, but not limited to, computing the mean of the two scores, computing the average of the two scores, and computing the product of the two scores. Other methods of combining the two scores include, but are not limited to, by learning the optimal combination of weights via logistic regression, bagging, and boosting.

In step S15, the software 40 executed by the processor 18 causes the electronic device 10 to compare the replay detection score against a threshold value. When the replay detection score fails to satisfy the threshold value, in step S16, the software 40 executed by the processor 18 causes the electronic device 10 to determine the received audio data is not of a live person and is thus fraudulent. However, when the replay detection score satisfies the threshold value, in step S17, the software 40 executed by the processor 18 causes the electronic device 10 to determine that the received audio data is of a live person and thus genuine.

It is contemplated by the present disclosure that the threshold value may be satisfied when the replay detection score is greater than or equal to the threshold value. However, other threshold values may be satisfied when the replay detection score is equal to or less than the threshold value. Alternatively, the threshold value may include multiple threshold values, each of which is required to be satisfied to satisfy the threshold value.

Although the example method and algorithm for enhancing detection of fraudulent audio data compares a replay detection score against a threshold value to determine whether the received audio data is genuine or fraudulent, it is contemplated by the present disclosure that the determination of whether the received audio data is genuine or fraudulent may be made in any manner. For example, the embedding extraction network and a classification layer of machine learning models (MLM) may be used to determine whether received audio data is genuine or fraudulent. More specifically, the embedding extraction network can extract a vector, also known as an embedding, which represents data and corresponds to activations from one of the hidden layers, usually a last hidden layer. The embeddings vector is entered into the classification layer which generates a decision score indicating the likelihood that the received audio data is genuine or fraudulent.

Using the method and algorithm for enhancing the detection of fraudulent audio data enhances the detection of fraudulent audio data which enhances the accuracy, trustworthiness, and robustness of liveness detection results and thus authentication transaction results.

The example methods and algorithms described herein may be conducted entirely by the electronic device 10 or partly by the electronic device 10, the operational device 12, and the server 14 via the network 16. Moreover, the example methods described herein may be conducted entirely on other computer systems (not shown) and/or other electronic devices 10 (not shown). Thus, it is contemplated by the present disclosure that the example methods and algorithms described herein may be conducted using any combination of computers, computer systems, and electronic devices (not shown). Furthermore, data described herein as being stored in the electronic device 10 may alternatively, or additionally, be stored in the operational device 12, the server 14, or in any computer system (not shown) or electronic device (not shown) operable to communicate with the electronic device 10 over the network 16.

Additionally, the example methods and algorithms described herein may be implemented with any number and organization of computer program components. Thus, the methods and algorithms described herein are not limited to specific computer-executable instructions. Alternative example methods and algorithms may include different computer-executable instructions or components having more or less functionality than described herein.

The example methods and/or algorithms described above should not be considered to imply a fixed order for performing the method and/or algorithm steps. Rather, the method and/or algorithm steps may be performed in any order that is practicable, including simultaneous performance of at least some steps. Moreover, the method and/or algorithm steps may be performed in real time or in near real time. It should be understood that, for any method and/or algorithm described herein, there can be additional, fewer, or alternative steps performed in similar or alternative orders, or in parallel, within the scope of the various embodiments, unless otherwise stated. Furthermore, the invention is not limited to the embodiments of the methods and/or algorithms described above in detail.

## Claims

1. A method for training machine learning models to enhance detection of fraudulent audio data comprising the steps of:
obtaining, by an electronic device, a training data set of genuine and replay audio data files;
partitioning the replay audio data files into data sets based on intrinsic properties of the replay audio data files; and
training a different machine learning model for each data set using the genuine audio data files and the replay audio data files in the respective data set.

2. The method according to claim 1, said partitioning step comprising:
determining features of each obtained replay audio data file; and
clustering together, using a clustering technique and based on feature similarity, the obtained replay audio data files, wherein each cluster is a different one of the data sets of obtained replay audio data files.

3. The method according to claim 2, wherein the clustering technique is an unsupervised or supervised technique.

4. The method according to any preceding claim, said partitioning step comprising:
creating a set of measurable types of artifacts based on the intrinsic properties of the replay audio data files;
determining at least one artifact pattern, wherein any combination of the types of artifacts is an artifact pattern; and
partitioning, based on the determined at least one artifact pattern, replay audio data files into a number of the data sets, wherein the number of data sets matches the number of artifact patterns in the at least one artifact pattern.

5. The method according to any preceding claim, said training step comprising;
training a machine learning model using the genuine audio data files and the replay audio data files in one of the data sets; and
training a different machine learning model using the genuine audio data files and the replay audio data files in a different one of the data sets.

6. The method according to claim 4, wherein the measurable artifacts are created by low quality hardware in replay devices.

7. The method according to claim 4, wherein the replay audio data files free of any artifact pattern are created by replay devices including high quality hardware.

8. An electronic device for training machine learning models to enhance detection of fraudulent audio data comprising:
a processor; and
a memory configured to store data, said electronic device being associated with a network and said memory being in communication with said processor and having instructions stored thereon which, when read and executed by said processor, cause said electronic device to:
obtain a training data set of genuine and replay audio data files;
partition the replay audio data files into data sets based on intrinsic properties of the replay audio data files; and
train a different machine learning model for each data set using the genuine audio data files and the replay audio data files in the respective data set.

9. The electronic device according to claim 8, wherein for partitioning the replay audio data files the instructions when read and executed by said processor, cause said electronic device to:
determine, using a clustering technique, features of each obtained replay audio data file; and
cluster together, based on feature similarity, the obtained replay audio data files, wherein each cluster is a different one of the data sets of obtained replay audio data files.

10. The method according to claim 9, wherein the clustering technique is an unsupervised or supervised technique.

11. The electronic device according to any one of claims 8 to 10, wherein for partitioning the replay audio data files the instructions when read and executed by said processor, cause said electronic device to:
create a set of measurable types of artifacts based on the intrinsic properties of the replay audio data files;
determine at least one artifact pattern, wherein any combination of the types of artifacts is an artifact pattern, and
partition, based on the determined at least one artifact pattern, replay audio data files into a number of the data sets, wherein the number of data sets matches the number of artifact patterns in the at least one artifact pattern.

12. The electronic device according to any one of claims 8 to 11, wherein the instructions when read and executed by said processor cause said electronic device to:
train a machine learning model using the genuine audio data files and the replay audio data files in one of the data sets; and
train a different machine learning model using the genuine audio data files and the replay audio data files in a different one of the data sets.

13. A non-transitory computer-readable recording medium in an electronic device for training machine learning models that enhance detection of fraudulent audio data, the non-transitory computer-readable recording medium storing instructions which when executed by a hardware processor cause the non-transitory recording medium to perform the method of any one of claims 1 to 7.

14. A method for enhancing detection of fraudulent audio data comprising the steps of:
receiving, by an electronic device, audio data of a speaker;
calculating, by one of a plurality of trained machine learning models operated by the electronic device, an artifact pattern voice replay score reflecting the likelihood that the received audio data includes an artifact pattern;
calculating, by a different one of the plurality of trained machine learning models operated by the electronic device, a free voice replay score reflecting the likelihood that the received audio data is free of the artifact pattern;
combining the artifact pattern and free voice replay scores into a replay detection score;
comparing the replay detection score against a threshold value; and
in response to determining the replay detection score satisfies the threshold value, determining the received audio data is of a live person.

15. The method according to claim 14, further comprising the step of determining the received audio data is fraudulent in response to determining the replay detection score fails to satisfy the threshold value.
